Europäisches Patentamt

European Patent Office

Office européen des brevets

(11) Publication number: **0 040 086**
**B1**

(12) # EUROPEAN PATENT SPECIFICATION

(45) Date of publication of patent specification: **28.01.87**

(51) Int. Cl.⁴: **F 24 F 11/04,** F 24 F 11/053, G 05 D 11/035

(21) Application number: **81302084.9**

(22) Date of filing: **11.05.81**

(54) Improved air conditioning control system with master and tracking controllers.

(30) Priority: **12.05.80 US 148571**

(43) Date of publication of application:
**18.11.81 Bulletin 81/46**

(45) Publication of the grant of the patent:
**28.01.87 Bulletin 87/05**

(84) Designated Contracting States:
**BE DE FR GB IT NL SE**

(56) References cited:
**DE-A-2 827 976**
**DE-C- 944 332**
**FR-A-2 323 185**
**FR-A-2 325 976**
**US-A-3 402 654**
**US-A-4 108 371**

(73) Proprietor: **ANEMOSTAT PRODUCTS DIVISION
DYNAMICS CORPORATION OF AMERICA
888 North Keyser Avenue
Scranton Pennsylvania (US)**

(72) Inventor: **Harris, William John
R.D. 4 Box 84A
Tunkhannock Pennsylvania 18657 (US)**
Inventor: **Waeldner, William John
Longview Terrace
Waverly Pennsylvania 18471 (US)**

(74) Representative: **Archer, Philip Bruce et al
Urquhart-Dykes & Lord Trinity Court
Trinity Street Priestgate
Peterborough Cambridgeshire PE1 1DA (GB)**

Courier Press, Leamington Spa, England.

## Description

### Background of the Invention

The present invention relates to an air conditioning system having at least two duct sections in which each duct section has an associated damper for regulating the air flow therethrough.

Conventional air conditioning systems may include controllers, and generally such controllers are of the pneumatic type. These controllers employ duct or independent supply air in the control and operation of a pneumatic actuator which moves a flow regulating damper in response to the demands of the controller. A differential pressure across a fixed orifice is conventionally employed to provide a flow variable signal representing flow in the duct section associated with the damper, the differential pressure being applied across a diaphragm for operating a push rod or other output member in a pneumatic-mechanical motion transducer. The push rod is operatively associated with a pivotally supported lever which is also influenced by a reference or bias signal provided by an adjustable reference means normally in the form of a spring engaging the lever. When temperature control or temperature reset is introduced, a pneumatic thermostat is usually employed with a pneumatic-mechanical motion transducer having a push rod or other output member acting in opposition to a bias or reset spring. The temperature or other air condition signal is combined with the aforesaid reference or bias signal to provide a composite signal acting on the lever in opposition to the push rod or other output member of the flow or differential pressure transducer. The temperature or other air condition control or reset signal may be transmitted to the reference or bias spring by a second pivotally supported lever.

The first mentioned lever of the controller provides a resultant signal at a control orifice which may comprise a flow variable signal compared against a reference or bias signal or a flow variable signal compared against a composite signal comprising the reference or bias signal and a temperature or other air condition signal. The control orifice thus establishes a pneumatic actuator operating pressure for movement and control of the damper for the maintenance of desired flow or volume conditions in the duct and for reset operation in accordance with the temperature or other air condition signal.

Controllers of the type described operate efficiently in regulating conditions in a single duct, mixing or air distribution box. They do not, however, efficiently meet requirements where two or more duct sections, mixing or distribution boxes must be coordinated in their air flow or volume control. For example, where supply and exhaust ducts or boxes require coordinated flow control, independent control by two or more controllers of the type described may result in excessive variation and departure from the desired coordinated flow conditions. Reference or bias and reset springs, lever pivot friction, transducer push rod friction, etc., result in inaccuracies unacceptable for certain applications. Further, the necessary flexibility in coordinating air flow or volume is lacking. A one-to-one flow rate might be practical with a pair of independent controllers if ideal conditions prevail in the design and manufacture of the controllers but various other flow ratios would be difficult if not impossible to achieve with the necessary degree of accuracy. Many applications require flow ratios other than one-to-one.

Similar difficulties may arise with the devices disclosed in German Patent Specifications Nos: 2827976 and 944332.

German Specification 2827976 discloses a device for regulating the intensity of an auxiliary air flow and a main flow of conditioned air at above atmospheric pressure. This device comprises a suction mixing chamber having a first inlet for the main air flow, a second inlet for the auxiliary air flow and an outlet for the mixture formed from the two air flows. A suction device sucks auxiliary air into the mixing chamber in dependence on the intensity of the main air flow. A first damping device adjusts the intensity of the main air flow entering the mixing chamber, and a second damping device adjusts the intensity of the auxiliary air flow. An actuating device adjusts the first damping device and a flow meter controls this actuating device to ensure that the intensity of the main air flow is kept constant.

In German Specification 944332 there is disclosed a device for automatically maintaining a constant quantative ratio between two gaseous media taking account of the temperature of one or both media. This device is particularly concerned with maintaining constant proportions of gas and hot air in industrial gas furnaces, taking account of the hot-air temperature. The device uses a flow divider as an air quantity sensor with a main orifice plate and an auxiliary orifice plate behind which the pressure is kept the same as the pressure behind the main orifice plate by means of a pressure regulator plate.

The auxiliary orifice plate is directly connected to a pipe supplying hot air and a cooling device is located between the auxiliary orifice plate and a pressure regulator to keep the partial air stream at a uniform temperature.

In particular German Specification 944332 describes a tracking controller for use in a system having first and second duct sections, the latter with an associated damper for regulating air flow therethrough. The tracking controller comprises first and second sensors respectively for producing first and second flow variable signals responsive respectively to flow conditions in said first and second duct section. First and second transducers are provided respectively to receive said first and second signals and with output elements acting in opposition to each other. A signal comparison and transmitting means is acted on in opposition by said output elements and is thus operable to receive and compare said two flow variable signals and to provide a resultant signal.

A pneumatic actuator for said damper in said second duct section is operable to receive said resultant signal and to position said damper in response thereto.

It is the object of the present invention to provide an improved air conditioning control system employing a master controller of the type described in combination with a tracking controller capable of closely and accurately following the operation of the master controller and its actuator and damper and capable of convenient adjustment of flow ratios between the dampers and duct sections, mixing and/or distribution boxes associated with the two controllers.

Summary of the Invention

In fulfillment of· the foregoing objects, an air conditioning control system is provided with master and tracking controllers capable of coordinated operation with a high degree of accuracy and with adjustability of flow ratios readily achieved in a simple mechanical operation as more clearly defined in claim 1. In particular, the master controller has a first pneumatic actuator associated therewith for operating a first damper in a first duct section, mixing or distribution box, etc. A first flow sensor reads differential pressure across a fixed orifice in the duct section and thus produces a first flow variable signal in response to sensed flow in the duct section. An adjustable reference or bias signal means is provided and a first signal comparison and transmitting means receives the two signals and provides a first resultant signal to a first actuator for operation thereof and for corresponding movement of the first damper in response thereto.

The tracking controller comprises a second flow sensor which reads differential pressure across an orifice in a second duct section and thus produces a second flow variable signal in response to the sensed flow in the duct section. A second signal comparison and transmitting means receives the first and second flow variable signals, compares the same, and transmits a second resultant signal to a second actuator for operation thereof and for a corresponding movement of a second damper in the second duct section.

Thus, the pressure differential or flow maintained in the first duct section by the master controller is employed as a reference in the tracking controller against the differential or flow in the second duct section. Accurate tracking operation is thus provided for and the desired coordinated operation of the controllers and their actuators and dampers results. Temperature or other air condition signals may also be introduced to the master controller and the effect thereof upon flow in the first duct section will be reflected through the tracking controller to the flow in the second duct section.

Adjustability of the effect of the first and second flow variable signals on the resultant signal in the tracking controller is provided for so that desired flow ratios may be established between two duct sections, boxes, etc., with the tracking operation of the controller serving to maintain such ratios despite changing flow conditions in the first duct section or box.

Brief Description of the Drawings

Fig. 1 of the drawings is a schematic illustration illustrating master and tracking controllers and associated elements in an air conditioning system. \

Fig. 2 is a top view of a tracking controller, diaphragm assemblies thereof being partially broken away the tracking controller per se being the subject-matter of European divisional patent application No. 85110173.3 published under No. 0170294.

Fig. 3 is a vertical sectional view of the controller taken generally as indicated at 3—3 in Figure 2.

Preferred Embodiments of the Invention

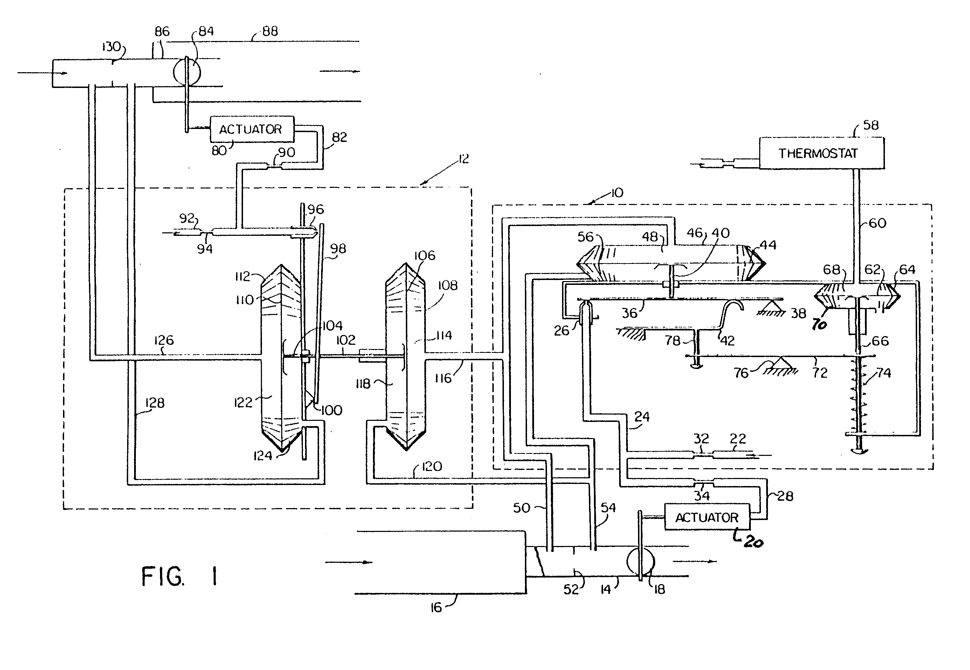

Referring to Fig. 1 a master controller is indicated generally at 10 and a tracking controller at 12. A first duct section 14 shown exiting from a mixing or distribution box 16 has a damper 18 disposed therein and operated by a pneumatic actuator 20. A supply of actuator and control air is introduced from a regulated source at 22 and a conduit 24 extends to control orifice 26 within the controller 10. The supply conduit 22 also has a branch conduit 28 extending to actuator 20 and restrictions 32, 34 are provided respectively in the conduits 22, 28. Restriction 32 permits pressure change to occur within the actuator 20 reflecting the out flow condition at control orifice 26 while restriction 34 may serve a damping function with regard to operation of the actuator 20.

The pressure established in actuator 20 responsive to the out flow condition at control orifice 26 may be regarded as a "resultant signal" operating the actuator 20 and the damper 18 within the duct section 14. Control of the out flow at the orifice and actuator pressure is provided for by a first lever 36 pivoted at 38 and acted upon by push rod or output member 40 and leaf spring 42. The push rod 40 responds to a diaphragm 44 in a diaphragm assembly 46 comprising a pneumatic-mechanical motion transducer. Upper chamber 48 in diaphragm assembly 46 receive air under pressure from duct 14 via conduit 50 upstream of a fixed orifice 52 in the duct section. Conduit 54 carries air under pressure from the downstream side of the orifice 52 to lower chamber 56 in the diaphragm assembly 46. Thus, it will be apparent that a differential pressure or flow variable signal is provided to the diaphragm assembly 46 for conversion to a mechanical motion signal at the push rod 40.

The spring 42 comprises an adjustable reference or bias spring acting in opposition to the push rod 40 and forms a part of a signal comparison and transmitting means for comparing the flow variable signal against the reference or bias signal and for establishing a lever position and out flow condition at the control orifice 26.

An air condition signal is preferably also employed in operation of the master controller 10 and a thermostat 58 may be of a conventional pneumatic type and situated in a room or other space conditioned by air supplied or exhausted by the duct section 14. An air pressure or pneumatic signal in conduit 60 represents an air condition signal applied to diaphragm 62 in diaphragm assembly 64 and converted to a mechanical motion signal at push rod or output member 66. The air pressure signal acts in upper chamber 68 and may be opposed by atmospheric pressure in lower chamber 70 of the diaphragm assembly or pneumatic-mechanical motion transducer. Push rod 66 engages a lever 72 in opposition to a spring 74 which may be referred to as a temperature or air condition reset spring. The lever 72 is pivoted at 76 and connected at an opposite end portion with spring engageable member 78.

From the foregoing it will be apparent that a temperature or other air condition signal is provided and is effected through a signal combining means comprising push rod 66, reset spring 74, lever 72, element 78, at the leaf spring 42 whereby to provide a composite signal to the first lever 36. That is, the composite signal of the leaf spring 42 includes the reference or bias signal of the spring and the temperature or other air condition signal. Adjustment may be provided at the element 78 and the reset spring 74.

As will be apparent, the master controller 10 will operate to establish and maintain a flow condition in the duct section 14 in accordance with the adjusted position of the element 48 and the spring 42. In the event of varying supply or upstream pressure, the controller will act to maintain the desired flow condition and, when temperature or other air condition control is included as illustrated, the flow will be reset in accordance with the temperature or other condition signal as reflected in the composite signal reaching the lever 36 via the spring 42. Efficient flow or volume control is thus exercised in the duct section 14. The tracking controller 12 operates a second pneumatic actuator 80 in accordance with a second "resultant signal" in line 82 to control the position of a second damper 84 in a duct section 86 entering a mixing or distribution box 88. The conduit 82 includes a restriction 90 and extends to a supply conduit 92 including a restriction 94. The supply conduit 92 receives a regulated supply of actuator and control air and extends to a second control orifice 96 associated with a second control lever 98. The lever 98 is pivoted at 100 and is acted upon and in opposition by first and second push rods or output members 102, 104. The push rod 102 is controlled by diaphragm 106 in diaphragm assembly 108 and the push rod 104 is controlled by a diaphragm 110 in diaphragm assembly 112. Right hand chamber 114 in the diaphragm assembly 108 receives air under pressure from branch conduit 116 extending from the aforementioned conduit 50 on the upstream side of fixed orifice 52 in duct section 14. Left hand chamber 118 in the diaphragm assembly or pneumatic-mechanical motion transducer 108 receives air under pressure from a conduit 120 extending to the aforementioned conduit 54 opening on the downstream side of fixed orifice 52 in duct section 14. Thus, the push rod 102 reflects a flow variable signal for the first duct section 14.

The push rod 104 reflects a second flow variable signal for the duct section 86 and has left and right hand chambers 122 124 respectively connected with conduits 126 and 128. The conduit 126 extends to the upstream side of a fixed orifice 130 in the second duct section 86 and the conduit 128 opens in the duct section 86 at the downstream side of the said fixed orifice.

As will be apparent, the flow in the duct section 14 as established by the master controller 10 will serve as a reference for tracking controller 12, said flow being reflected at the push rod 102 in the mechanical motion form of the first flow variable signal. The push rod 104 reflects in mechanical motion form the second flow variable signal of the duct section 86 and such signals act in opposition on the lever 98 whereby they are compared and transmitted by such second signal comparison and transmitting means to provide a second resultant signal at the control orifice 96 and the conduit 82 to the actuator 80. The restriction 94 permits the control orifice 96 to establish air pressure as a resultant signal in the line 82 and the restriction 90 may serve a damping function. The actuator 80 in turn controls the damper 84 in the second duct section 86 as established by the tracking controller.

As will be apparent the tracking controller 12 will operate to efficiently track the flow condition in the duct section 14 and to establish and maintain a coordinated flow condition in the second duct section 86. The flow ratio may be one-to-one or may be established at other desired ratios by adjustment means to be described hereinbelow. As illustrated the duct section 86 and the mixing or distribution box 88 may for example be on the supply side of a laboratory or other space requiring a negative pressure with respect to surrounding area. The box 16 and duct section 14 may for example be disposed on the exhaust side of the laboratory space and the two boxes or duct sections may be set up to provide for shut off of the supply side and full open conditions at the exhaust side in the event of failure of actuator and control air to the controllers. Thus, negative pressure will be maintained as desired in the laboratory space during operation of the controllers and even on failure thereof.

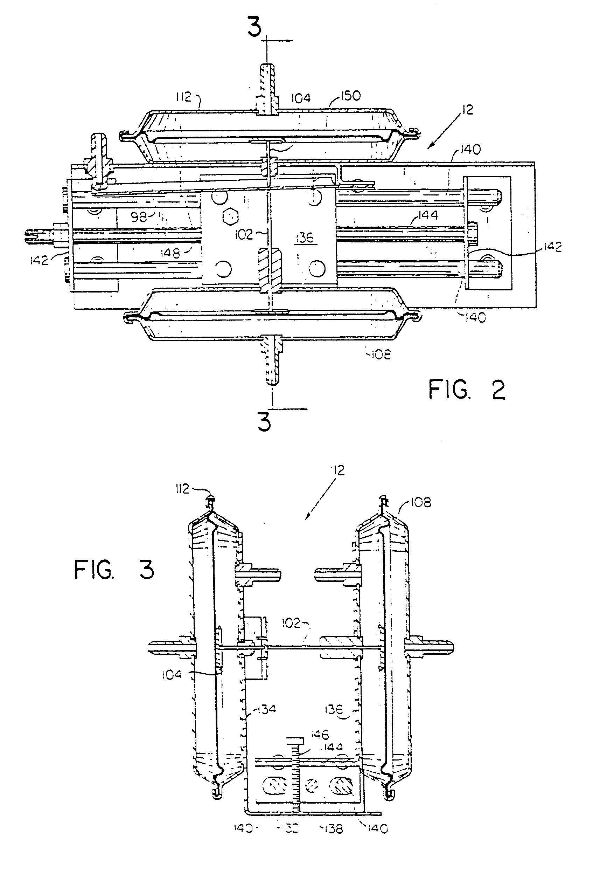

Referring now particularly to Figs. 2 and 3, it will be observed that the mechanical embodiment of the tracking controller 12 includes a base member 132 directly supporting diaphragm assembly 112 by means of a bracket 134. The base member 132 also indirectly supports the diaphragm assembly 108 by means of a sliding bracket 136. The sliding bracket 136 has depending flanges 138 at each end thereof which slidably receive first and second slides or slide rods 140, 140. The slide rods 140, 140 are secured at end portions in brackets 142, 142 and a lead screw 144 may be provided for ease and convenience in adjustment of the bracket 136 along the rods. The lead screw 144 is journaled in the brackets 142, 142 and threadably received in the flanges 138, 138 so that rotation thereof will result in translation of the bracket 136. A binder screw 146 serves to secure the bracket 136 in an adjusted position along the base or frame member 132.

As will be apparent, the diaphragm assembly 108 may be adjusted along the length of the base of the frame member 132 on the bracket 136 so as to adjust the position of its push rod 102 along the length of lever 98, Fig. 2. As shown, the push rod 102 is aligned with an opposite push rod 104 and this provides for a one-to-one flow ratio when the tracking controller 12 is used in combination with a master controller 10 as illustrated and described in Fig. 1. Line 148 in Fig. 2 illustrates the position of the push rod 102 for a two-to-one flow ratio and line 150 illustrates the position of the push rod for a one-to-one flow ratio. Obviously, any desired flow ratio may be selected merely by properly positioning the bracket 136 and the diaphragm assembly 108 along the slide rods 140, 140.

With the tracking controller adapted for adjustability as described, it will be apparent that precise and accurate tracking can be provided for between flow conditions in a first or master duct and a second or tracking duct. Further, adjustability of flow ratios is easily and conveniently provided for in the mere adjustment of the diaphragm assembly 108 and its push rod 102 relative to the push rod 104. Still further, a plurality of tracking controllers may be employed with a single master controller or master duct in the manner illustrated and described for the single tracking controller 12.

**Claims**

1. In an air conditioning system having at least two duct sections (14, 86) each with an associated damper (18, 84) for regulating air flow therethrough, the combination comprising at least one master controller (10) and an operatively associated first actuator (20) for one damper (18), said master controller (10) comprising a first flow sensor (50, 52, 54) producing a first flow variable signal in response to sensed flow in the duct section (14) associated with said one damper (18) characterised by at least one tracking controller (12) and an operatively associated second actuator (80) for the other damper (84), adjustable reference signal means, first means for comparing said flow variable and reference signals and for transmitting a first resultant signal to said first actuator (20) for operation thereof and for corresponding movement of said one damper (18) in response thereto, and said tracking controller (12) comprising a second flow sensor producing a second flow variable signal in response to sensed flow in the duct section (86) associated with the other damper (84), and second signal comparison and transmitting means (98, 102, 104) for comparing said first and second flow variable signals and for transmitting a second resultant signal to said second actuator (80) for operation thereof and for corresponding movement of said other damper (84) in response thereto.

2. The combination in an air conditioning system as set forth in claim 1 wherein an air condition sensor (60, 62, 64) is provided and produces a condition variable signal in response to a sensed air condition, wherein a means is provided for combining said condition variable signal and said adjustable reference signal to provide a composite signal, and wherein said first signal comparison and transmitting means receives said composite signal and compares the same with said flow variable signal to provide said first resultant signal to said first actuator (20).

3. The combination in an air conditioning system as set forth in claim 2 wherein said air condition sensor (60, 62, 64) is operable in response to an air temperature condition.

4. The combination in an air conditioning system as set forth in claim 1 wherein said second signal comparison and transmitting means is adjustable to vary the effect of at least one of said first and second flow variable signals on said second resultant signal whereby to vary the ratio of flow control between said dampers (18, 84).

5. The combination in an air conditioning system as set forth in claim 3 wherein said first flow variable signal is pneumatic, wherein said master controller (10) includes pneumatic-mechanical motion transducer means (46) receiving said signal, and wherein said first comparison and transmitting means received said flow variable signal from said transducer (46) in mechanical motion form for comparison and transmission.

6. The combination in an air conditioning system as set forth in claim 5 wherein said air temperature condition signal is in pneumatic ·form, wherein a pneumatic-mechanical motion transducer (64) is provided for receiving said signal, wherein said adjustable reference signal is in mechanical motion form, wherein said signal combining means receives said mechanical motion air temperature condition signal from said transducer (64) and said adjustable reference signal and transmits said composite signal to said first signal comparison and transmitting means for comparison with said mechanical motion flow variable signal.

7. The combination in an air conditioning system as set forth in claim 6 wherein said first and second flow variable signals received by said tracking controller (12) are pneumatic in form, wherein first and second pneumatic-mechanical motion transducers (108, 112) are provided in said controller (112) respectively for receiving said signals, and wherein said second signal comparison and transmitting means receives said first and second flow variable signals respectively from said transducers (108, 112) in mechanical motion form to provide said second resultant signal to said second actuator (80).

8. The combination in an air conditioning system as set forth in claim 7 wherein the mechanical advantage between said first and second flow variable signals is adjustable by said second signal comparison and transmitting means for corresponding adjustment of said second resultant signal and for varying the ratio of flow control between said two dampers (18, 84).

**Patentansprüche**

1. Klimaanlage mit mindestens zwei Luftführungsabschnitten (14, 86), denen jeweils eine Drosselklappe (18, 84) zur Regulierung des Luftdurchsatzes zugeordnet ist, wobei die Kombination mindestens einen Führungsregler (10) und ein damit in Wirkverbindung stehendes erstes Steuerorgan (20) für eine Drosselklappe (18) umfasst, und dem Führungsregler ein erster Durchfluß-Sensor (50, 52, 54) zugeordnet ist, der ein erstes Volumenänderungssignal in Abhängigkeit des ermittelten Volumenstroms in dem die erste Drosselklappe (18) aufweisenden Luftführungsabschnitt erzeugt, gekennzeichnet durch mindestens einen Folgeregler (12) und ein mit diesem in Wirkverbindung stehendes Stellglied (80) für die andere Drosselklappe (84), durch einstellbare Referenzsignal-Glieder, durch ein erstes Vergleichsglied für den Vergleich der Volumenänderungs- und Referenzsignale und zur Weiterleitung eines ersten daraus resultierenden Signals an das erste Stellglied (20) zu dessen Betätigung und zu einer entsprechenden Bewegung der einen Drosselklappe (18), wobei dem Folgeregler (12) ein zweiter Durchfluß-Sensor zugeordnet ist, der ein zweites Volumenänderungssignal in Abhängigkeit des ermittelten Durchflusses in dem die andere Drosselklappe (84) aufweisenden Luftführungsabschnitt liefert, durch ein zweites Vergleichsglied (98, 102, 104) für den Vergleich des ersten und zweiten Volumenänderungssignals und zur Weiterleitung eines daraus resultierenden zweiten Signals zur Ansteuerung des zweiten Stellgliedes (80) und einer entsprechenden Bewegung der anderen Drosselklappe (84).

2. Klimaanlage nach Anspruch 1, dadurch gekennzeichnet, daß ein Luft-Zustands-Sensor (50, 52, 54) vorgesehen ist, der in Abhängigkeit eines abgetasteten Wertes des Luftzustandes ein Zustands-Änderungssignal erzeugt, daß Schaltglieder vorgesehen sind, in denen dieses Zustands-Änderungssignal und das einstellbare Referenzsignal zwecks Bildung eines gemeinsamen Ausgangssignals zusammengeführt werden, das an das erste Vergleichsglied übertragen wird, um dort mit dem Volumenänderungssignal zwecks Bildung des ersten resultierenden Signals für das erste Stellglied (20) verglichen zu werden.

3. Klimaanlage gemäß Anspruch 2, dadurch gekennzeichnet, daß der Luft-Zustands-Sensor (50, 52, 54) auf Änderungen der Lufttemperatur anspricht.

4. Klimaanlage nach Anspruch 1, dadurch gekennzeichnet, daß das zweite Vergleichsglied für den Vergleich und die Übertragung des daraus resultierenden Signals einstellbar ist, um die Wirkung von mindestens einem der ersten und zweiten Volumenänderungssignale auf das zweite resultierende Signal zu ändern und hierdurch das Verhältnis der Durchflußregelung zwischen den Drosselklappen (18, 84) zu ändern.

5. Klimaanlage gemäß Anspruch 3, dadurch gekennzeichnet, daß das erste Volumenänderungssignal ein pneumatisches Signal ist, daß der Führungsregler (10) einen pneumatisch-mechanischen Umformer (46) zur Aufnahme dieses Signals umfaßt, und daß an das erste Vergleichs- und Übertragungsglied das Volumenänderungssignal vom Umformer (46) als mechanische Bewegung für den Vergleich und zur Weiterleitung übertragen wird.

6. Klimaanlage nach Anspruch 5, dadurch gekennzeichnet, daß das der Lufttemperatur zugeordnete Zustands-Änderungssignal ein pneumatisches Signal ist, das von einem pneumatisch-mechanischen Umformer (64) aufgenommen wird, daß das einstellbare Referenzsignal als mechanische Bewegung verkörpert ist, daß das Schaltglied das Lufttemperatur-Zustands-Änderungssignal als mechanische Bewegung über den Umformer (64) und das einstellbare Referenzsignal erhält und das resultierende Signal an das erste Vergleichsglied zwecks Vergleichs mit dem als mechanische Bewegung verkörperten Volumenänderungssignal weiterleitet.

7. Klimaanlage nach Anspruch 6, dadurch gekennzeichnet, daß das vom Folgeregler (12) aufgenommene erste und zweite Volumenänderungssignal pneumatische Signale sind, daß ein erster und zweiter pneumatisch-mechanischer Umformer (108, 112) für die Aufnahme des jeweiligen Signals dem Folgeregler (112) zugeordnet sind, und daß das zweite Vergleichsglied das jeweils erste und zweite Volumenänderungssignal von den Umformern (108, 112) als mechanische Bewegung aufnimmt und das zweite daraus resultierende Signal dem zweiten Stellglied (80) übermittelt.

8. Klimaanlage nach Anspruch 7, dadurch gekennzeichnet, daß das Last-Kraft-Verhältnis zwischen dem ersten und zweiten Volumenänderungssignal durch das zweite Signal-Vergleichs- und Übertragungsglied einstellbar ist zwecks entsprechenden Abgleichs des zweiten resultierenden Signals und zur Änderung des Verhältnisses der Durchflußregelung zwischen den beiden Drosselklappen (18, 84).

**Revendications**

1. Dans un système de climatisation comprenant au moins deux éléments de conduit (14, 86) chacun avec un volet associé (18, 84) pour régler le débit d'air dans ce conduit, la combinaison comprenant au moins un régulateur principal (10) et un premier actionneur (20) fonctionnellement associé pour un premier volet (18), ce régulateur principal (10) comprenant un premier capteur de débit (50, 52, 54) qui produit un premier signal variable de débit en réponse au débit détecté dans l'élément de conduit (14) associé à ce premier volet (18), caractérisée par au moins un régulateur asservi (12) et un deuxième actionneur (80) fonctionellement associé pour l'autre volet (84), un dispositif réglable de signal de référence, un premier dispositif de comparaison du signal variable de débit et du signal de référence et de transmission d'un premier signal résultant au premier actionneur (20) pour sa manoeuvre et pour un mouvement correspondant du premier volet (18) en réponse à cette manoeuvre, et le régulateur asservi (12) comprenant un deuxième capteur de débit qui produit un deuxième signal variable de débit en réponse au débit détecté dans l'élément de conduit(86) associé à l'autre volet (84), et un deuxième dispositif de comparaison de signal et de transmission (98, 102, 104) pour comparer les premier et deuxième signaux variables de débit et pour transmettre un deuxième signal résultant au deuxième actionneur (80) pour sa manoeuvre et pour un mouvement correspondant de l'autre volet (84) en rèponse à cette manoeuvre.

2. Combinaison dans un système de climatisation suivant la revendication 1, dans laquelle un capteur de caractéristique d'air (60, 62, 64) est prévu et fournit un signal variable de caractéristique en réponse à une caractéristique d'air détectée, dans laquelle un dispositif est prévu pour combiner ce signal variable de caractéristique et le signal de référence réglable, de manière à fournir un signal composite, et dans laquelle le premier dispositif de comparaison de signal et de transmission reçoit ce signal composite et le compare au signal variable de débit pour fournir le premier signal résultant au premier actionneur (20).

3. Combinaison dans un système de climatisation suivant la revendication 2, dans laquelle le capteur de caractéristique d'air (60, 62, 64) agit en réponse à une condition de température de l'air.

4. Combinaison dans un système de climatisation suivant la revendication 1, dans laquelle le deuxième dispositif de comparaison de signal et de transmission est réglable de manière à modifier l'effet d'au moins l'un des premier et deuxième signaux variables de débit sur le deuxième signal résultant, afin de modifier le rapport de réglage de débit entre les volets (18, 84).

5. Combinaison dans un système de climatisation suivant la revendication 3, dans laquelle le premier signal variable de débit est pneumatique, dans laquelle le régulateur principal (10) comprend un transducteur pneumatique-mouvement mécanique (46) recevant ledit signal, et dans laquelle le premier dispositif de comparaison et de transmission reçoit le signal variable de débit dudit transducteur (46) sous forme d'un mouvement mécanique, pour comparaison et transmission.

6. Combinaison dans un système de climatisation suivant la revendication 5, dans laquelle le signal de condition de température d'air est sous forme pneumatique, dans laquelle un transducteur pneumatique-mouvement mécanique (64) est prévu pour recevoir ce signal, dans laquelle le signal de référence réglable est sous forme de mouvement mécanique, dans laquelle le dispositif de combinaison de signal reçoit le signal de condition de température d'air, sous forme de mouvement mécanique du transducteur (64), et le signal de référence réglable et transmet le signal composite au premier dispositif de comparaison de signal et de transmission pour comparaison avec le signal variable de débit sous forme de mouvement mécanique.

7. Combinaison dans un système de climatisation suivant la revendication 6, dans laquelle les premier et deuxième signaux variables de débit reçus par le régulateur asservi (12) sont sous forme pneumatique, dans laquelle des premier et deuxième transducteurs pneumatique-mouvement mécanique (108, 112) sont prévus dans le régulateur (12) respectivement pour recevoir ces signaux, et dans laquelle le deuxième dispositif de comparaison de signal et de transmission reçoit les premier et deuxième signaux variables de débit respectivement de ces transducteurs (108, 112) sous forme de mouvement mécanique, pour fournir le deuxième signal résultant au deuxième actionneur (80).

8. Combinaison dans un système de climatisation suivant la revendication 7, dans laquelle l'avantage mécanique entre les premier et deuxième signaux variables de débit est réglable par le deuxième dispositif de comparaison de signal et de transmission, pour un réglage correspondant du deuxième signal résultant et pour modifier le rapport de réglage de débit entre les deux volets (18, 84).

FIG. 1

FIG. 2

FIG. 3